# EUROPÄISCHE PATENTANMELDUNG

(11) **EP 4 759 693 A1**
(43) Veröffentlichungstag der Anmeldung: **17.06.2026**
(21) Anmeldenummer: 25219291.9
(22) Anmeldetag: 28.11.2025
(51) Int. Cl.: B62J 6/02, B62J 6/023, B62J 45/415, B60Q 1/12, B60Q 1/18

(54) **ZWEIRAD MIT EINER BELEUCHTUNGSEINRICHTUNG UND VERFAHREN ZUM BETREIBEN EINES SOLCHEN ZWEIRADS**

(30) Priorität: 16.12.2024 DE 102024212002
(71) Anmelder: Robert Bosch GmbH, 70442 Stuttgart (DE)
(72) Erfinder: Lemejda, Markus, 71642 Ludwigsburg (DE); Schwarz, Marius, 70565 Stuttgart (DE); Jung, Oliver, 73732 Esslingen (DE)

(57) **Zusammenfassung**

Die Erfindung betrifft ein Zweirad (100) mit einer Beleuchtungseinrichtung (200) sowie ein Verfahren zum Betreiben eines solchen Zweirads (100). Das Zweirad (100) umfasst eine Beleuchtungseinrichtung (200), welche derart in einem Frontbereich des Zweirads (100) angeordnet ist, dass ein von der Beleuchtungseinrichtung (200) ausgehender Lichtkegel (220) zumindest in einen vor dem Zweirad (100) liegenden Bereich richtbar ist. Weiter umfasst das Zweirad (100) eine Verstelleinrichtung (221), die mit der Beleuchtungseinrichtung (200) verbunden ist, und die eingerichtet ist, eine Richtung des Lichtkegels (220) zu ändern, sowie einem Assistenzsystem (222), das mit der Verstelleinrichtung (221) regelungstechnisch verbunden ist, und das eingerichtet ist, eine aktuelle Fahrtrajektorie (301) des Zweirads (100) zu erfassen, und eine zu fahrende Soll-Trajektorie (300) des Zweirads (100) zu berechnen. Kennzeichnen ist, dass das Assistenzsystem (222) ein Stellsignal für die Verstelleinrichtung (221) in der Art bereitstellt, dass die Verstelleinrichtung (221) die Richtung des Lichtkegels (220) in Richtung der Soll-Trajektorie (300) richtet, wenn die Soll-Trajektorie (300) von der aktuellen Fahrtrajektorie (301) abweicht.

## Beschreibung

### Stand der Technik

Die vorliegende Erfindung betrifft ein Zweirad mit einer Beleuchtungseinrichtung nach Gegenstand des unabhängigen Anspruchs. Gegenstand der vorliegenden Erfindung ist auch ein Verfahren zum Betreiben eines solchen Zweirads.

Aus der EP3187399A1 sind adaptive Kurvenlichter für Zweiräder bekannt, die in Abhängigkeit einer erfassten Schräglage des Zweirads einen Kurvenbereich ausleuchten. Aus der DE102014225625A1 ist ein Fahrassistenzsystem bekannt, das einen Fahrer beim Befahren einer Kurve unterstützt. Hierbei wird eine vorausliegende Fahrsituation mit aktuellen Fahrdynamikdaten verglichen und bei Überschreiten eines Gefahrenschwellwertes ein Warnsignal ausgegeben.

### Offenbarung der Erfindung

Erfindungsgemäß wird ein Zweirad mit einer Beleuchtungskomponente mit den kennzeichnenden Merkmalen des unabhängigen Anspruchs zur Verfügung gestellt. Solch ein Zweirad bietet den Vorteil, dass eine vorausliegende Kurve so ausgeleuchtet wird, dass der zu befahrende Streckenverlauf beleuchtet ist und damit der Fahrer durch den Lichtkegel seines Zweirads sicher durch die Kurve geführt wird. Anders ausgedrückt, wird der psychologische Effekt genutzt, wonach ein Zweiradfahrer dazu neigt, in die Richtung zu fahren, in die er blickt. Das Ausleuchten der zu befahrenden Soll-Trajektorie unterstützt diese Blickführung und damit den Fahrer beim sicheren Durchfahren einer Kurve.

Erfindungsgemäß wird ein Zweirad mit einer Beleuchtungseinrichtung zur Verfügung gestellt, wobei die Beleuchtungseinrichtung derart in einem Frontbereich des Zweirads angeordnet ist, dass ein von der Beleuchtungseinrichtung ausgehender Lichtkegel zumindest in einen vor dem Zweirad liegenden Bereich richtbar ist. Weiter umfasst das Zweirad eine Verstelleinrichtung, die mit der Beleuchtungseinrichtung verbunden ist, und die eingerichtet ist, eine Richtung des Lichtkegels zu ändern, sowie einem Assistenzsystem, das mit der Verstelleinrichtung regelungstechnisch verbunden ist, und das eingerichtet ist, eine aktuelle Fahrtrajektorie des Zweirads zu erfassen, und eine zu fahrende Soll-Trajektorie des Zweirads zu berechnen. Kennzeichnend ist, dass das Assistenzsystem ein Stellsignal für die Verstelleinrichtung in der Art bereitstellt, dass die Verstelleinrichtung die Richtung des Lichtkegels in Richtung der Soll-Trajektorie richtet, wenn die Soll-Trajektorie von der aktuellen Fahrtrajektorie abweicht.

Weitere vorteilhafte Ausführungsformen der vorliegenden Erfindung sind Gegenstand der Unteransprüche.

Es sei angemerkt, dass die Soll-Trajektorie des Zweirads ein von dem Assistenzsystem errechneter bzw. errechenbarer vorausliegender Streckenverlauf ist. Dieser kann von dem Assistenzsystem basierend auf aktuellen Fahrdynamikdaten als vorteilhaft bewertet sein, etwa was die Fahrsicherheit angeht. Mit anderen Worten kann beispielsweise ein Streckenverlauf errechnet werden, auf dem das Unfallrisiko am geringsten ist oder eine Kurve mit möglichst wenig Regeleingriffen weiterer Assistenzsysteme durchfahren werden kann. Die aktuelle Fahrtrajektorie ist dabei diejenige Fahrtrajektorie, die basierend auf aktuellen Fahrdynamikdaten vorliegt. Mit anderen Worten ausgedrückt, kann die aktuelle Fahrtrajektorie einer Richtung eines aktuell vorliegenden Geschwindigkeitsvektor des Zweirads entsprechen.

Vorteilhaft ist, wenn das Assistenzsystem die Soll-Trajektorie aus erfassten fahrdynamischen Größen, insbesondere einer Geschwindigkeit, einer Gierrate, einem Lenkwinkel oder einer Schräglage des Zweirads, ermittelt. Diese Größen beschreiben die Fahrdynamik eines Zweirads und eigenen sich daher als Berechnungsgrundlage für die Soll-Trajektorie. Weiterhin werden diese Größen bei vielen Zweirädern grundsätzlich erfasst, oder sind einfach zu erfassen und können so mit geringem technischem Aufwand für das Assistenzsystem zur Verfügung gestellt werden. Es ist denkbar, Informationen aus weiteren Fahrassistenzsystemen zur Ermittlung der Soll-Trajektorie heranzuziehen, beispielsweise Daten eines Radarsystems oder Kamera basierter Systeme, die einen vorlausliegenden Streckenabschnitt erfassen. Es ist weiterhin denkbar, dass zur Ermittlung der Soll-Trajektorie Kartendaten verwendet werden und mittels eines Navigationsgeräts im Zweirad die vorausliegende Route aus solchen Kartendaten erfasst wird und eine entsprechende Soll-Trajektorie entlang dieser Route berechnet wird. Es ist weiterhin denkbar, dass zur Ermittlung der Soll-Trajektorie übermittelte Daten anderer Verkehrsteilnehmer herangezogen werden. Zweiräder und Motorräder können über Vehicle-to-Vehicle (V2V) Kommunikationseinheiten verfügen, mittels derer sie Informationen austauschen. Der vorausliegende Streckenverlauf und eine mögliche Soll-Trajektorie, ermittelt aus Daten von Verkehrsteilnehmern, die diese Strecke bereits entlanggefahren sind, könnten auch Teil dieser Informationen sein.

In einer weiteren Ausführungsform ist vorteilhaft, wenn die Verstelleinrichtung eingerichtet ist, die Richtung des Lichtkegels horizontal und/oder vertikal zu ändern. Zweiräder neigen sich bei einer Kurvenfahrt zur Seite und die Karosserie befindet sicher näher am Boden als bei einer aufrechten Geradeausfahrt. Es ist vorteilhaft, wenn diese seitliche Neigung durch die Verstelleinrichtung ausgeglichen werden kann.

Vorteilhaft ist, wenn das Assistenzsystem eingerichtet ist, eine Schräglage des Zweirads zu erfassen und die Verstelleinrichtung angesteuert wird, wenn die Schräglage größer als 15 Grad Neigung ist. Bei dieser solchen Ausführungsform wird der Leuchtkegel also nicht verstellt, wenn das Zweirad zwar kleine Lenkbewegungen durchführt, der Fahrer jedoch weiterhin geradeaus fahren möchte. Dies kann beispielsweise beim Überholen eines vorausfahrenden Verkehrsteilnehmers der Fall sein. Der Fahrer wird so nicht von einer unerwünschten Richtungsempfehlung des Lichtkegels abgelenkt. Weiterhin kann hierdurch auch der Rechenaufwand des Systems insgesamt minimiert werden, da dieses nur aktiviert wird, wenn es aus Sicht der Fahrsicherheit notwendig ist. Es ist aber auch denkbar, einen von 15 Grad verschiedenen Grenzwert für die Aktivierung der Verstelleinrichtung zu wählen, beispielsweise könnte ein Fahrer einen Grenzwert mittels eines Eingabeelements selbst vorgeben. Es ist ebenfalls denkbar, dass der Grenzwert für die Aktivierung der Ansteuerung in einem Bereich zwischen 5 Grad und 30 Grad liegt und in Abhängigkeit einer erfassten Fahrsituation, beispielsweise der Soll-Trajektorie, ein Wert für die Aktivierung dynamisch gewählt wird.

In einer weiteren Ausführungsform ist es vorteilhaft, wenn die Verstelleinrichtung angesteuert wird, wenn die Soll-Trajektorie einer Kurvenfahrt entspricht. Dies stellt sicher, dass das System nur im Falle einer Kurvenfahrt aktiviert wird und der Fahrer in anderen Fahrsituationen, die keiner Kurvenfahrt entsprechen nicht abgelenkt wird. Eine Kurvenfahrt kann hierbei durch das Assistenzsystem erkannt werden, etwa basierend auf einer Krümmung oder Richtungsänderung der vorausberechneten Soll-Trajektorie.

Vorteilhaft ist, wenn das Zweirad wenigstens ein weiteres Beleuchtungselement aufweist, das in einem seitlichen Bereich des Zweirads angeordnet ist und von dem Assistenzsystem angesteuert wird, wenn die Soll-Trajektorie von der aktuellen Fahrtrajektorie in seitlicher Richtung derjenigen Seite des Zweirads abweicht, in der auch das weitere Beleuchtungselement angebracht ist. Dieses weitere Beleuchtungselement kann die Blickführung weiter unterstützen, oder die Sicht verbessern. Beispielsweise könnte bei einer nächtlichen Fahrt durch dieses weitere Beleuchtungselement eine Kurve ausgeleuchtet werden und für eine Gesamtübersicht sorgen. Der Lichtkegel des ersten Beleuchtungselements kann dann in dieser nun besser einsehbaren Kurve die Blickführung übernehmen. Denkbar wäre hierbei auch, unterschiedliche Lichtintensitäten oder Lichtfarben anzuwenden. So könnte der Lichtkegel des ersten Beleuchtungselements von höherer Intensität sein als der des seitlich angebrachten Beleuchtungselements und bleibt somit auch in einer ausgeleuchteten Kurve für den Fahrer erkennbar.

Es ist weiterhin vorteilhaft, wenn das seitliche Beleuchtungselement wenigstens zwei Helligkeitsstufen aufweist und eine erste Helligkeit des Beleuchtungselements bei einer ersten Abweichung der Soll-Trajektorie von der Fahrtrajektorie geringer ist als eine zweite Helligkeit bei einer zweiten Abweichung der Soll-Trajektorie von der aktuellen Fahrtrajektorie, wobei die erste Abweichung geringer ist als die zweite Abweichung. Hiermit kann eine weitere Unterstützung des Fahrers erreicht werden, da dieser anhand der Intensität der seitlichen Beleuchtung darauf schließen kann wie groß der Kurvenradius der vorausliegenden Kurve ist und sich auf eine entsprechende Soll-Trajektorie einstellen kann. Eine höhere Lichtintensität beispielsweise vermittelt dem Fahrer, dass eine enge Kurve durchfahren werden muss und er kann das Zweirad entsprechend steuern. Auch nachfolgende Fahrer können so über den vorausliegenden Fahrbahnverlauf informiert werden.

Gegenstand der vorliegenden Erfindung ist auch ein Verfahren zum Betreiben eines eben beschriebenen Zweirads mit einer Beleuchtungseinrichtung. Dieses umfasst das Erfassen einer aktuellen Fahrtrajektorie des Zweirads und berechnen einer Soll-Trajektorie des Zweirads mittels eines Fahrassistenzsystems. Es umfasst weiter das Bereitstellen eines Stellsignals für eine Verstelleinrichtung, die mit der Beleuchtungseinrichtung verbunden ist, und die eingerichtet ist, eine Richtung eines Lichtkegels ausgehend von der Beleuchtungseinrichtung zu ändern, sowie das Richten des Lichtkegels in Richtung der Soll-Trajektorie, wenn die Soll-Trajektorie von der aktuellen Fahrtrajektorie abweicht. Dieses Verfahren kann somit auf alle Zweiräder übertragen werden, die eine oben beschriebene Beleuchtungseinrichtung aufweisen.

### Kurze Beschreibung der Zeichnungen

Ausführungsbeispiele der Erfindung sind in den Zeichnungen dargestellt und in der nachfolgenden Beschreibung näher erläutert.
- Figur 1: eine schematische Darstellung eines Zweirads mit einer Beleuchtungseinrichtung gemäß einer Ausführungsform der vorliegenden Erfindung
- Figur 2: eine schematische Darstellung eines Zweirads mit einer Beleuchtungseinrichtung gemäß einer Ausführungsform der vorliegenden Erfindung
- Figur 3: eine schematische Darstellung eines erfindungsgemäßen Verfahrens

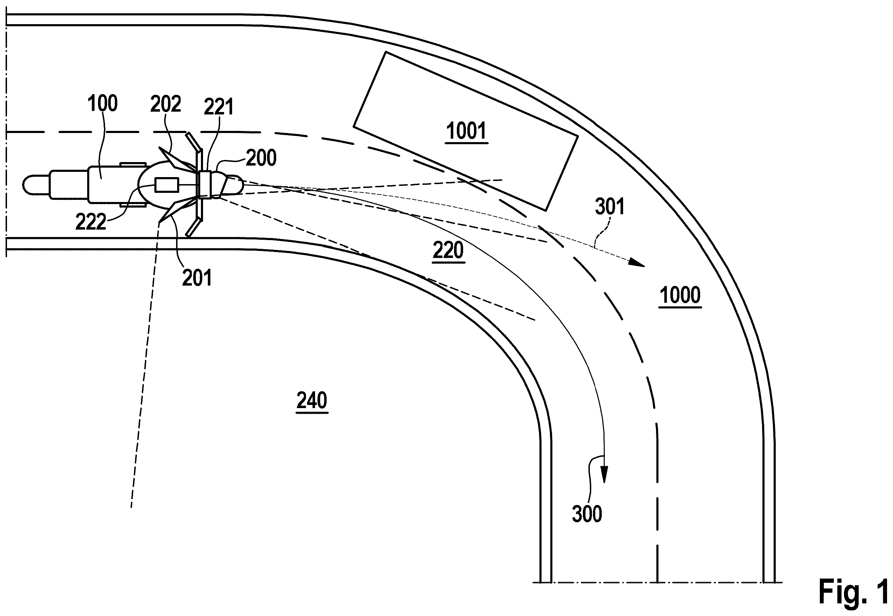

Figur 1 zeigt schematisch in einer Draufsicht ein fahrendes Zweirad 100, das sich einer vorausliegenden Kurve 1000 nähert. Das Zweirad 100 weist dabei eine Beleuchtungseinrichtung 200, sowie seitliche Beleuchtungselemente 201 und 202 auf. Die Soll-Trajektorie 300 ist dabei eine solche Trajektorie, die insbesondere sicher durch die Kurve führt und die weiterhin durch ein Assistenzsystem 222 des Zweirads 100 ermittelt wurde. Die Trajektorie 301 stellt eine mögliche Trajektorie eines nicht durch das Beleuchtungssystem unterstützten Fahrer dar. Die Beleuchtungseinrichtung 200 wird nun durch die Verstelleinrichtung 221 so verstellt, dass der von der Beleuchtungseinrichtung 200 ausgehende Leuchtkegel 220 auf die zu fahrende Soll-Trajektorie 300 gerichtet ist. Das seitliche Beleuchtungselement 201 leuchtet hierbei mittels des Leuchtkegels 240 den Kurvenbereich großflächig aus. Das gegenüberliegende seitliche Beleuchtungselement 202 kann dabei deaktiviert bleiben, beispielsweise um Verkehrsteilnehmer 1001 auf der Gegenfahrbahn nicht zu blenden.

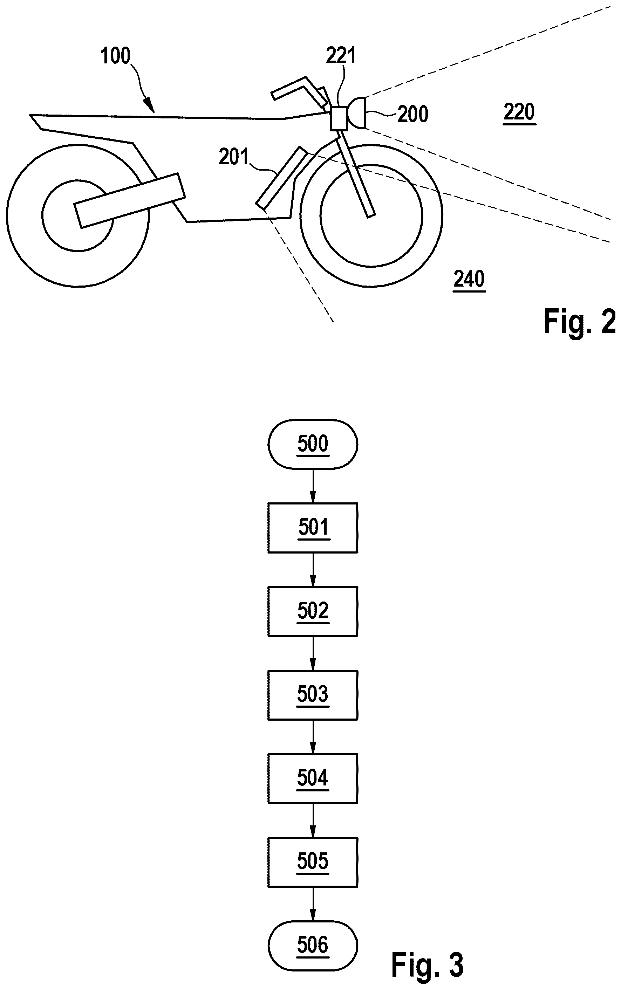

Figur 2 zeigt schematisch ein Zweirad 100 in der Seitenansicht. Das Zweirad 100 weist die Beleuchtungseinrichtung 200 mit der Verstelleinrichtung 221 auf. Von der Beleuchtungseinrichtung 200 geht der Leuchtkegel 220 aus. Weiterhin ist das seitlich am Zweirad 100 angebrachte Beleuchtungselement 201 gezeigt, von welchem der Leuchtkegel 240 ausgeht.

Figur 3 zeigt schematisch einen Ablauf eines erfindungsgemäßen Verfahrens. Mit Schritt 500 beginnt das Verfahren. In Schritt 501 wird eine aktuelle Fahrtrajektorie 301 des Zweirads 100 erfasst, beispielsweise durch das Erfassen von Signalen eines Beschleunigungssensors, Neigungssensors, Gierratensensors, Lenkwinkelsensors und/oder Geschwindigkeitssensors des Zweirads. Aus diesen Signalen und/oder beispielsweise Kartendaten oder übermittelten Informationen weiterer Verkehrsteilnehmer kann weiterhin in Schritt 502 eine Soll-Trajektorie 300 des Zweirads vorausberechnet werden. In Schritt 503 kann eine Abweichung der aktuellen Fahrtrajektorie 301 von der Soll-Trajektorie 300 ermittelt werden und in Schritt 504 kann ein Stellsignal für die Verstelleinrichtung 221 bereitgestellt werden, wenn die Soll-Trajektorie 300 von der aktuellen Fahrtrajektorie 301 abweicht. In Schritt 505 kann dann der Lichtkegel 220 ausgehend von der Beleuchtungseinrichtung 200 auf die Soll-Trajektorie 300 gerichtet werden. Mit Schritt 506 endet das Verfahren und kann erneut durchlaufen werden.

## Patentansprüche

1. Zweirad (100) mit
• einer Beleuchtungseinrichtung (200), welche derart in einem Frontbereich des Zweirads (100) angeordnet ist, dass ein von der Beleuchtungseinrichtung (200) ausgehender Lichtkegel (220) zumindest in einen vor dem Zweirad (100) liegenden Bereich richtbar ist,
• einer Verstelleinrichtung (221), die mit der Beleuchtungseinrichtung (200) verbunden ist, und die eingerichtet ist, eine Richtung des Lichtkegels (220) zu ändern, sowie
• einem Assistenzsystem (222), das mit der Verstelleinrichtung (221) regelungstechnisch verbunden ist, und das eingerichtet ist, eine aktuelle Fahrtrajektorie (301) des Zweirads (100) zu erfassen, und eine zu fahrende Soll-Trajektorie (300) des Zweirads (100) zu berechnen,
• **dadurch gekennzeichnet, dass** das Assistenzsystem (222) ein Stellsignal für die Verstelleinrichtung (221) in der Art bereitstellt, dass die Verstelleinrichtung (221) die Richtung des Lichtkegels (220) in Richtung der Soll-Trajektorie (300) richtet, wenn die Soll-Trajektorie (300) von der aktuellen Fahrtrajektorie (301) abweicht.

2. Zweirad nach Anspruch 1, wonach das Assistenzsystem (222) die Soll-Trajektorie (300) aus erfassten fahrdynamischen Größen, insbesondere einer Geschwindigkeit, einer Gierrate, einem Lenkwinkel oder einer Schräglage des Zweirads (100), ermittelt.

3. Zweirad nach einem der vorhergehenden Ansprüche, wonach die Verstelleinrichtung (221) eingerichtet ist, die Richtung des Lichtkegels (220) horizontal und/oder vertikal zu ändern.

4. Zweirad nach einem der vorhergehenden Ansprüche, wonach das Assistenzsystem (222) eingerichtet ist, eine Schräglage des Zweirads (100) zu erfassen und die Verstelleinrichtung (221) angesteuert wird, wenn die Schräglage des Zweirads (100) größer als 15 Grad Neigung ist.

5. Zweirad nach deinem der vorhergehenden Ansprüche, wonach die Verstelleinrichtung (221) angesteuert wird, wenn die Soll-Trajektorie (300) einer Kurvenfahrt entspricht.

6. Zweirad nach einem der vorhergehenden Ansprüche, mit wenigstens einem weiteren Beleuchtungselement (201), das in einem seitlichen Bereich des Zweirads (100) angeordnet ist und von dem Assistenzsystem (221) angesteuert wird, wenn die Soll-Trajektorie (300) von der aktuellen Fahrtrajektorie (301) in seitlicher Richtung derjenigen Seite des Zweirads (100) abweicht, in der auch das weitere Beleuchtungselement (201) angebracht ist.

7. Zweirad nach Anspruch 6 wonach das seitliche Beleuchtungselement (201) wenigstens zwei Helligkeitsstufen aufweist und eine erste Helligkeit des Beleuchtungselements (201) bei einer ersten Abweichung der Soll-Trajektorie (300) von der aktuellen Fahrtrajektorie (301) geringer ist als eine zweite Helligkeit bei einer zweiten Abweichung der Soll-Trajektorie (300) von der aktuellen Fahrtrajektorie (301), wobei die erste Abweichung geringer ist als die zweite Abweichung.

8. Verfahren zum Betreiben eines Zweirads mit einer Beleuchtungseinrichtung (200) nach einem der vorhergehenden Ansprüche 1 bis 7, umfassend
• Erfassen einer aktuellen Fahrtrajektorie (301) des Zweirads und berechnen einer Soll-Trajektorie (300) des Zweirads mittels eines Fahrassistenzsystems (222),
• Bereitstellen eines Stellsignals für eine Verstelleinrichtung (221), die mit der Beleuchtungseinrichtung (200) verbunden ist, und die eingerichtet ist, eine Richtung eines Lichtkegels (220) ausgehend von der Beleuchtungseinrichtung (200) zu ändern,
• Richten des Lichtkegels (220) in Richtung der Soll-Trajektorie (300), wenn die Soll-Trajektorie (300) von der aktuellen Fahrtrajektorie (301) abweicht.
